# EUROPÄISCHE PATENTANMELDUNG

(11) **EP 3 311 987 A1**
(43) Veröffentlichungstag der Anmeldung: **25.04.2018**
(21) Anmeldenummer: 16195102.5
(22) Anmeldetag: 21.10.2016
(51) Int. Cl.: B29C 67/00, B33Y 30/00

(54) **FERTIGUNGSVORRICHTUNG ZUM SCHICHTWEISEN HERSTELLEN EINES DREIDIMENSIONALEN OBJEKTS**

(71) Anmelder: Technische Universität München, 80333 München (DE)
(72) Erfinder: FISCHER, Stefan, 82377 Penzberg (DE); PAMMER, Sebastian Tobias, 81679 München (DE); LEONHARDT, Stefan, 80797 München (DE); HAERST, Miriam, 80634 München (DE)
(74) Vertreter: Hoefer & Partner Patentanwälte mbB

(57) **Zusammenfassung**

Die Erfindung betrifft eine Fertigungsvorrichtung (1) zum schichtweisen Herstellen eines dreidimensionalen Objekts (2), umfassend einen gegenüber einer Umgebung der Fertigungsvorrichtung (1) abgeschlossenen Arbeitsraum (9) mit einer Arbeitsebene (10), auf der das Objekt (2) formbar ist, eine Auftragevorrichtung (4) zum Aufschmelzen eines zugeführten Ausgangsmaterials (5) und zum schichtweisen Formen des aufgeschmolzenen Ausgangsmaterials auf der Arbeitsebene (10) zu dem Objekt (2), eine Bewegungseinheit (6) umfassend zumindest einen Antrieb (3) und zumindest eine Kraftübertragungseinheit (8) zum Bewegen der Auftragevorrichtung (4) in zumindest eine Raumrichtung, wobei die Auftragevorrichtung (4) und die Bewegungseinheit (6) innerhalb des abgeschlossenen Arbeitsraums (9) angeordnet sind.

## Beschreibung

Die Erfindung betrifft eine Fertigungsvorrichtung zum schichtweisen Herstellen von dreidimensionalen Objekten. Somit stellt die Fertigungsvorrichtung insbesondere einen 3D-Drucker dar.

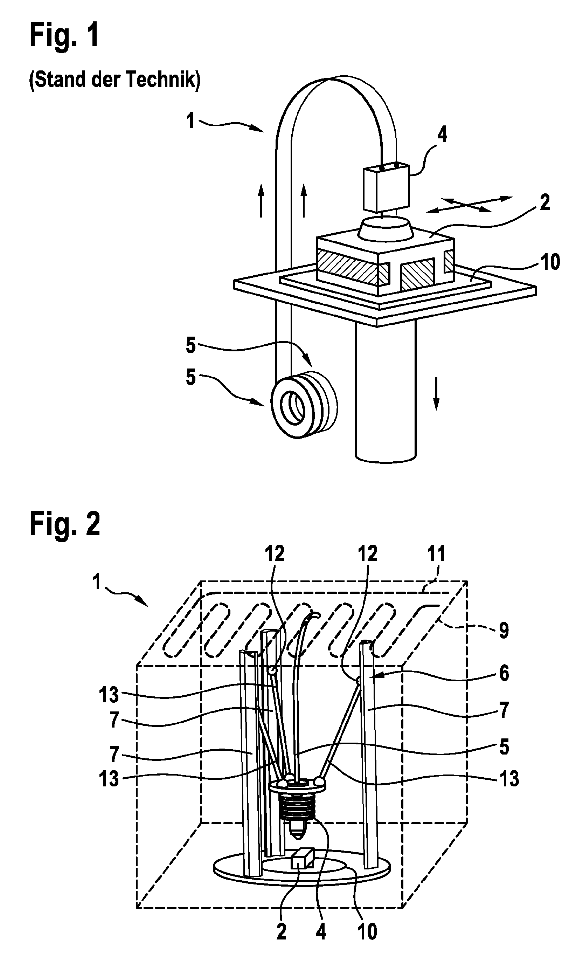

Aus dem Stand der Technik sind Fertigungsvorrichtungen zum schichtweisen Herstellen von Gegenständen bekannt. Insbesondere ist aus dem Stand der Technik bekannt, dreidimensionale Objekte mittels Schmelzschichtung herzustellen. Ein solches Verfahren wird auch Fused Filament Fabrication (FFF) genannt. Eine Fertigungsvorrichtung, die dreidimensionale Objekte gemäß diesem Verfahren herstellen kann, ist in Figur 1 skizziert.

So zeigt Figur 1 schematisch eine Fertigungsvorrichtung 1 gemäß dem Stand der Technik. Die Fertigungsvorrichtung 1 umfasst eine Auftragevorrichtung 4, die ein Ausgangsmaterial 5 aufnehmen und aufschmelzen kann. In Figur 1 sind zwei Ausgangsmaterialien 5 gezeigt, wobei es sich insbesondere um ein Baumaterial und um ein Hilfsmaterial handeln kann. Mit dem Baumaterial lässt sich das dreidimensionale Objekt 2 herstellen, das Hilfsmaterial dient zum Erstellen von Stützen für das dreidimensionale Objekt 2. Das aufgeschmolzene Ausgangsmaterial 5 kann von der Auftragevorrichtung 4 anschließend auf eine Arbeitsebene 10 aufgebracht werden. Dazu ist bevorzugt vorgesehen, dass die Auftragevorrichtung 4 entlang der Arbeitsebene 10 bewegbar ist. Sobald eine Schicht vollständig auf die Arbeitsebene 10 aufgetragen ist, wird entweder die Arbeitsebene 10 oder die Auftragevorrichtung 4 in einer Richtung senkrecht zu der Arbeitsebene 10 verfahren, so dass die Auftragevorrichtung 4 eine neue Schicht auf die zuvor aufgetragene Schicht aufbringen kann. Auf diese Weise wird das dreidimensionale Objekt 2 schichtweise hergestellt. Nach dem vollständigen schichtweisen Aufbauen wird das Hilfsmaterial bevorzugt entfernt, sodass das fertige dreidimensionale Objekt 2 zur Verfügung steht.

Für die Verarbeitung gewisser Kunststoffe als Ausgangsmaterialien 5 ist das Temperieren der Umgebung während des Fertigungsvorgangs von großem Vorteil. Hierzu wird insbesondere ein abgeschlossener Bauraum verwendet, der mit einer Heizvorrichtung auf eine vorgegebene Temperatur aufgeheizt werden kann. Dies ist insbesondere aus der US 6,722,872 B1 bekannt.

Bei bekannten Bauräumen ist jedoch nachteilig, dass sich die gesamte Antriebseinheit zum Bewegen der Auftragevorrichtung außerhalb des temperierten Bauraums befinden muss, insbesondere um eine Überhitzung der Antriebseinheit zu vermeiden. Somit weist der Bauraum eine Vielzahl von Öffnungen auf, durch die eine Kontaktierung zwischen Auftragevorrichtung und Antriebseinheit ermöglicht ist.

Es ist Aufgabe der Erfindung, eine Fertigungsvorrichtung zum schichtweisen Herstellen eines dreidimensionalen Objekts anzugeben, die bei einfacher und kostengünstiger Herstellung und Montage eine Temperierung während der Herstellung des dreidimensionalen Objekts ermöglicht.

Die Lösung dieser Aufgabe erfolgt durch die Merkmale des unabhängigen Anspruchs.

Somit wird die Aufgabe gelöst durch eine Fertigungsvorrichtung zum schichtweisen Herstellen eines dreidimensionalen Objekts, wobei die Fertigungsvorrichtung einen Arbeitsraum, eine Auftragevorrichtung und eine Bewegungseinheit umfasst. Der Arbeitsraum ist gegenüber einer Umgebung der Fertigungsvorrichtung abgeschlossen. Außerdem weist der Arbeitsraum eine Arbeitsebene auf, auf der das Objekt formbar ist. Unter "abgeschlossen" ist hierbei insbesondere zu verstehen, dass der Arbeitsraum gegenüber der Umgebung temperiert, insbesondere erwärmt werden kann, ohne dass übergebührliche Wärmeverluste vorhanden sind. Somit ist unter dem Begriff "abgeschlossen" insbesondere nicht zwangsläufig Gasdichtheit zu verstehen, wobei eine solche Gasdichtheit bevorzugt vorgesehen ist. Allerdings können Öffnungen vorhanden sein, die das Innere des Arbeitsraums mit der Umgebung der Fertigungsvorrichtung verbinden, solange eine Temperierung des Arbeitsraums mit üblichen Wärmeverlusten ermöglicht ist.

Die Auftragevorrichtung dient zum Aufschmelzen eines zugeführten Ausgangsmaterials und zum schichtweisen Formen des aufgeschmolzenen Ausgangsmaterials auf der Arbeitsebene zu dem Objekt. Somit lässt sich das Objekt einfach und aufwandsarm herstellen, wobei beliebige Geometrien berücksichtigt werden können. Dadurch, dass das schichtweise Formen des Objekts innerhalb des Arbeitsraums geschieht, kann das Formen des Ausgangsmaterials zu dem Objekt innerhalb einer temperierten Umgebung stattfinden. So ist der Arbeitsraum durch eine Heizvorrichtung und/oder Kühlvorrichtung erhitzbar oder kühlbar. Auf diese Weise lassen sich optimale Temperaturen einstellen, die für das Formen des Ausgangsmaterials zu dem Objekt vorteilhaft sind.

Die Bewegungseinheit umfasst zumindest einen Antrieb und zumindest eine Kraftübertragungseinheit und dient zum Bewegen der Auftragevorrichtung in zumindest einer Raumrichtung. Besonders vorteilhaft sind mehrere Antriebe und/oder mehrere Kraftübertragungseinheiten vorhanden, um ein Bewegen der Auftragevorrichtung in mehreren Raumrichtungen zu ermöglichen.

Es ist vorgesehen, dass sowohl die Auftragevorrichtung als auch die Bewegungseinheit innerhalb des abgeschlossenen Arbeitsraums angeordnet sind. Somit sind keine Öffnungen des Arbeitsraums notwendig, um eine Kraftübertragung zwischen einem Antrieb und der Auftragevorrichtung zu ermöglichen. Der Arbeitsraum kann somit bevorzugt abgeschlossen ausgebildet werden, wodurch Wärmeverluste im Vergleich zum Stand der Technik verringert sind. Gleichzeitig ist ein kompakter Aufbau der Fertigungsvorrichtung ermöglicht. Insbesondere ist somit ein einfaches und kostengünstiges Herstellen der Fertigungsvorrichtung mit der Möglichkeit der Temperierung ermöglicht.

Die Unteransprüche haben bevorzugte Weiterbildungen der Erfindung zum Inhalt.

Eine Bewegung der Auftragevorrichtung ist bevorzugt ausschließlich durch Bewegungseinheit ermöglicht. Somit umfasst die Bewegungseinheit sämtliche Komponenten, die zum Bewegen der Auftragevorrichtung notwendig sind. Da sich die Bewegungseinheit innerhalb des Arbeitsraums befindet, sind somit keinerlei Durchführungen von Kraftübertragungselementen oder Halteelementen oder sonstigen Elementen, die zum Bewegen der Auftragevorrichtung notwendig sind, vorhanden bzw. wird die Anzahl dieser Durchführungseinrichtungen deutlich reduziert. Somit ist der Arbeitsraum während des schichtweisen Formens des Objekts zuverlässig temperierbar.

Der Arbeitsraum weist bevorzugt eine Heizvorrichtung auf. Mit der Heizvorrichtung ist das Innere des Arbeitsraums aufheizbar. Das Aufheizen kann insbesondere auf eine Temperatur oberhalb der Raumtemperatur erfolgen. Unter Raumtemperatur wird in diesem Zusammenhang eine Temperatur von etwa 20°C angesehen. Auf diese Weise ist eine optimale Bedingung bereitstellbar, um das Ausgangsmaterial sicher und zuverlässig zu dem Objekt zu formen.

Die Auftragevorrichtung und/oder die Bewegungseinheit sind bevorzugt mit einer Kühlvorrichtung gekoppelt oder liegen in einer temperaturbeständigen Ausführung vor. Die Kühlvorrichtung erlaubt ein Kühlen der Auftragevorrichtung und/oder der Bewegungseinheit insbesondere mittels Wasser und/oder Öl und/oder Luft und/oder anderen Fluiden. Das Kühlen erfolgt insbesondere auf eine Temperatur, die sich im Rahmen der Einsatztemperatur der Auftragevorrichtung und/oder Bewegungseinheit befindet. Somit sind für die Auftragevorrichtung und/oder die Bewegungseinheit solche Rahmenbedingungen vorhanden, wie wenn der Arbeitsraum nicht temperiert, insbesondere nicht aufgeheizt, wäre.

Die Kraftübertragungseinheit der Bewegungseinheit umfasst bevorzugt ein Schlitten. Der Schlitten ist in einer Führungsschiene geführt und über ein Verbindungselement mit der Auftragevorrichtung gekoppelt. Außerdem ist vorgesehen, dass der Schlitten von einem Antrieb entlang der Führungsschiene bewegbar ist. Somit ist ein einfaches und kostengünstiges Bewegen der Auftragevorrichtung ermöglicht. Je nach Anordnung der Führungsschiene und des Verbindungselements ist somit ein Bewegen der Auftragevorrichtung in zumindest einer Raumrichtung ermöglicht.

Der Antrieb weist besonders vorteilhaft zumindest einen Magneten auf. Der Magnet kann ein Permanentmagnet und/oder ein Elektromagnet sein. Dabei ist vorgesehen, dass der Magnet magnetisch mit dem Schlitten gekoppelt ist, sodass der Schlitten durch den Antrieb bewegbar ist. Besonders vorteilhaft ist vorgesehen, dass der Magnet durch den Antrieb entlang der Führungsschiene verschiebbar ist. Durch die magnetische Kopplung zwischen Magnet und Schlitten erfolgt somit auch ein Verschieben des Schlittens entlang der Führungsschiene. Auf diese Weise ist eine einfache und kostengünstige sowie insbesondere temperaturbeständige Bewegungseinheit realisiert.

Ebenso ist besonders vorteilhaft vorgesehen, dass die Bewegungseinheit drei Schlitten aufweist. Dabei ist jeder der Schlitten in einer eigenen Führungsschiene geführt. Außerdem ist vorgesehen, dass jeder der Schlitten einen eigenen Antrieb aufweist. So ist insbesondere vorteilhaft, wenn jeder Schlitten mit einem eigenen Magneten magnetisch gekoppelt ist, wobei der Magnet durch den Antrieb entlang der Führungsschiene verschiebbar ist. Durch einen derartigen Aufbau der Bewegungseinheit ist insbesondere ermöglicht, dass durch wahlweises Verschieben von einem Schlitten oder zwei Schlitten oder drei Schlitten entlang der jeweiligen Führungsschiene eine Ausrichtung und/oder Bewegung der Auftragevorrichtung innerhalb des Arbeitsraums ermöglicht ist. Gleichzeitig ist die Bewegungseinheit einfach und kostengünstig, insbesondere temperaturbeständig, aufgebaut und somit optimal für den Einsatz innerhalb des temperierten Arbeitsraums geeignet.

Die Führungsschienen verlaufen bevorzugt parallel zueinander. Außerdem sind die Führungsschienen bevorzugt senkrecht zu der Arbeitsebene angeordnet. Des Weiteren ist besonders vorteilhaft, dass sich die Führungsschienen in einem regelmäßigen Winkelabstand um einen Mittelpunkt erstrecken. Die Verbindungselemente, die jeweils einen Schlitten mit der Auftragevorrichtung verbinden, weisen bevorzugt Kugelgelenke sowohl an der Verbindungsstelle zu dem Schlitten als auch an der Verbindungsstelle zu der Auftragevorrichtung auf. Auf diese Weise ist die Auftragevorrichtung sicher und zuverlässig innerhalb des Arbeitsraums bewegbar.

Die Bewegungseinheit umfasst bevorzugt eine Dreiachs-Kinematik mit rechtwinkligen Achsen, um die Auftragevorrichtung zu bewegen. Alternativ umfasst die Bewegungseinheit eine Delta-Kinematik zum Bewegen der Auftragevorrichtung. In jedem Fall ist bevorzugt vorgesehen, dass ein Antrieb der jeweiligen Kinematik zusammen mit der Kinematik selbst innerhalb des Arbeitsraums angeordnet ist.

Durch die Bewegungseinheit ist bevorzugt ein Bewegen der Auftragevorrichtung zumindest in drei translatorischen Freiheitsgraden ermöglicht. Bei den drei translatorischen Freiheitsgraden handelt es sich insbesondere um drei unabhängig voneinander ausgebildete Raumrichtungen. Somit ist ein vollständiges Anfahren jedes Punktes des Arbeitsraums oder zumindest eines Teilbereichs des Arbeitsraums ermöglicht. Dadurch ist ein schichtweises Herstellen von beliebig geformten dreidimensionalen Objekten ermöglicht. Besonders vorteilhaft ist außerdem vorgesehen, dass die Auftragevorrichtung ebenso in drei rotatorischen Freiheitsgraden bewegbar ist.

Weitere Einzelheiten, Vorteile und Merkmale der vorliegenden Erfindung ergeben sich aus nachfolgender Beschreibung von Ausführungsbeispielen anhand der Zeichnungen. Es zeigt:
- Fig. 1: eine schematische Abbildung einer Fertigungsvorrichtung gemäß dem Stand der Technik,
- Fig. 2: eine schematische Abbildung einer Fertigungsvorrichtung gemäß einem Ausführungsbeispiel der Erfindung, und
- Fig. 3: eine schematische Detailansicht der Fertigungsvorrichtung gemäß dem Ausführungsbeispiel der Erfindung.

Figur 2 zeigt eine schematische Abbildung einer Fertigungsvorrichtung 1 gemäß einem Ausführungsbeispiel der Erfindung. Die Fertigungsvorrichtung 1 umfasst eine Auftragevorrichtung 4, die zum Aufschmelzen zumindest eines Ausgangsmaterials 5 geeignet ist. Bei dem Ausgangsmaterial 5 handelt es sich insbesondere um einen Kunststoff. Dabei ist vorgesehen, dass das Ausgangsmaterial 5 strangförmig vorliegt und insbesondere auf einer Rolle bevorratet ist. Durch das Aufschmelzen des Ausgangsmaterials 5 lässt sich ein dreidimensionales Objekt 2 schichtweise herstellen.

Das schichtweise Herstellen erfolgt derart, dass durch die Auftragevorrichtung 4 eine Schicht aus aufgeschmolzenen Ausgangsmaterials 5 auf eine Arbeitsebene 10 aufgebracht wird. Anschließend wird die Auftragevorrichtung 4 senkrecht von der Arbeitsebene 10 wegbewegt. Alternativ kann auch ein entsprechendes Wegbewegen der Arbeitsebene 10 von der Auftragevorrichtung 4 erfolgen. Anschließend wird durch die Auftragevorrichtung 4 eine weitere Schicht aus dem aufgeschmolzenen Ausgangsmaterial 5 auf die zuvor aufgetragene Schicht aufgebracht. Dieser Vorgang wird so oft wiederholt, bis das auszuformende dreidimensionale Objekt fertig geformt ist.

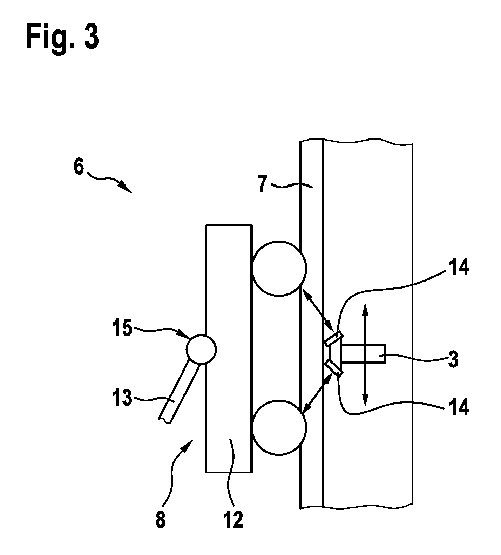

Zum Bewegen der Auftragevorrichtung 4 ist eine Bewegungseinheit 6 vorhanden. Die Bewegungseinheit 6 ist in Figur 3 gezeigt und wird nachfolgend erklärt. Insbesondere ist die Bewegungseinheit 6 mit einer Delta-Kinematik versehen, die ein Bewegen der Auftragevorrichtung 4 in 3 unabhängige Raumrichtungen ermöglicht. Somit lassen sich dreidimensionale Objekte 2 mit beliebigen Geometrien herstellen.

Die Fertigungsvorrichtung 1 weist außerdem einen Arbeitsraum 9 auf. Der Arbeitsraum 9 ist durch eine Heizvorrichtung 11 aufheizbar, wodurch das schichtweise Herstellen des Objekts 2 vereinfacht ist. So sind aus dem Stand der Technik Ausgangsmaterialien 5 bekannt, die sich durch Temperieren des Arbeitsraums 9, bevorzugt durch Erhitzen des Arbeitsraums 9, leichter formen lassen, wodurch das Herstellen des Objekts 2 vereinfacht ist.

Innerhalb des Arbeitsraums 9 sind sowohl die Auftragevorrichtung 4 als auch die Bewegungseinheit 6 angebracht. Außerdem befindet sich die Arbeitsebene 10 innerhalb des Arbeitsraums 9. Somit befinden sich sämtliche Komponenten, die zum Bewegen der Auftragevorrichtung 4 benötigt werden, innerhalb des Arbeitsraums 9. Durch eine Grenze des Arbeitsraums 9 ist lediglich das Ausgangsmaterial 5 zu führen, wenn ein Vorrat, insbesondere in Form einer Rolle, außerhalb des Arbeitsraums 9 gelagert ist. Dahingegen ist vermieden, einzelne Elemente der Bewegungseinheit 6 durch eine Grenze des Arbeitsraums 9 zu führen. So ist insbesondere bei dem eingangs genannten Stand der Technik notwendig, dass Kraftübertragungselemente durch die Grenze des Arbeitsraums 9 geführt werden, da sich ein Antrieb der Auftragevorrichtung 4 außerhalb des Arbeitsraums 9 befindet.

Der Arbeitsraum 9 wird bevorzugt durch wärmeisolierte Wände abgegrenzt. Dabei muss der Arbeitsraum 9 nicht zwingend gasdicht ausgebildet sein, wobei Gasdichtheit bevorzugt ist. Durch die Wände erfolgt insbesondere eine Wärmeisolierung, sodass Wärmeverluste beim Aufheizen des Arbeitsraums 9 innerhalb von üblichen Grenzen liegen. Durch das Vorsehen von sowohl der Auftragevorrichtung 4 als auch der Bewegungseinheit 6 innerhalb des Arbeitsraums 9 können die Wände des Arbeitsraums 9 einfach und aufwandsarm gefertigt und montiert werden. Insbesondere sind die beschriebenen Durchführungen durch die Grenze des Arbeitsraums 9, das bedeutet durch die Wände des Arbeitsraums 9, nicht notwendig.

Wie zuvor beschrieben, handelt es sich bei der Kinematik der Bewegungseinheit 6 um eine Delta-Kinematik. So sind drei Führungsschienen 7 vorhanden, wobei die drei Führungsschienen 7 regelmäßig rund um die Arbeitsebene 10 angebracht sind. Außerdem erstrecken sich die Führungsschienen 7 senkrecht zu der Arbeitsebene 10. Die Führungsschienen 7 verlaufen parallel zueinander.

In Figur 3 ist gezeigt, dass die Bewegungseinheit 6 zumindest einen Antrieb 3 und zumindest eine Kraftübertragungseinheit 8 aufweist. Sowohl der Antrieb 3 als auch die Kraftübertragungseinheit 8 sind an jeweils einer Führungsschiene 7 angebracht. Dies bedeutet, dass die Bewegungseinheit 6 drei Antriebe 3 sowie drei Kraftübertragungseinheiten 8 aufweist. Es ist ersichtlich, dass somit sowohl Antrieb 3 als auch Kraftübertragungseinheit 8 innerhalb des Arbeitsraums 9 angeordnet sind.

Der Antrieb 3 umfasst bevorzugt zwei Magnete 14. Diese Magnete 14 sind durch den Antrieb 3 entlang der Führungsschiene 7 bewegbar. Die Kraftübertragungseinheit 8 umfasst einen Schlitten 12, der an der Führungsschiene 7 gelagert ist. Außerdem umfasst die Kraftübertragungseinheit 8 ein Verbindungselement 13, das sich zwischen dem Schlitten 12 und der Auftragevorrichtung 4 erstreckt. Dabei ist vorgesehen, dass jeweils ein Kugelgelenk 15 zwischen Verbindungselement 13 und Schlitten 12 sowie zwischen Verbindungselement 13 und Auftragevorrichtung 4 (nicht gezeigt) angebracht ist. Der Schlitten 12 ist durch magnetische Kraft mit den Magneten 14 des Antriebs 3 gekoppelt. Somit bewirkt ein Verschieben der Magnete 14 entlang der Führungsschiene 7 auch ein Bewegen des Schlittens 12 entlang der Führungsschiene 7.

Die Auftragevorrichtung 4 und/oder die Führungsschiene 7 und/oder der Schlitten 12 und/oder die Magnete 14 und/oder der Antrieb 3 und/oder das Verbindungselement 13 sind bevorzugt durch eine (nicht gezeigte) Kühlvorrichtung gekühlt. Durch die Kühlvorrichtung sind die beschriebenen Teile der Bewegungseinheit 6 und/oder die Auftragevorrichtung 4 bevorzugt auf eine Temperatur kühlbar, die diese dann aufweisen würden, wenn die Fertigungsvorrichtung 1 das Objekt 2 schichtweise herstellt und der Arbeitsbereich 9 nicht temperiert ist. Alternativ oder zusätzlich können die Auftragevorrichtung 4 und/oder die Führungsschiene 7 und/oder der Schlitten 12 und/oder die Magnete 14 und/oder der Antrieb 3 und/oder das Verbindungselement 13 aus einem besonders hitzebeständigen Material ausgebildet oder mit diesem zumindest abschnittsweise beschichtet sein.

Durch die Kugelgelenke 15 ist sichergestellt, dass die Auftragevorrichtung 4 stets dieselbe Ausrichtung innerhalb des Arbeitsraums 9 aufweist. Durch gleichzeitiges Verfahren aller Schlitten 12 entlang der jeweiligen Führungsschiene 7 in dieselbe Richtung ist somit eine Höhe der Auftragevorrichtung 4 über der Arbeitsebene 10 einstellbar. Durch gleichzeitiges Verfahren von einem Schlitten 12 oder zwei Schlitten 12 in dieselbe Richtung und/oder durch gegensätzliches Verfahren von zumindest zwei Schlitten 12 entlang der Führungsschienen 7 ist eine Bewegung der Auftragevorrichtung 4 über der Arbeitsebene 10 ermöglicht. Somit lässt sich das Objekt 2 einfach und aufwandsarm herstellen.

Insbesondere stellt die Delta-Kinematik eine einfache und robuste Kinematik dar, sodass diese auch innerhalb des temperierten Arbeitsraums 9 angebracht werden kann. Dabei ist in jedem Fall sichergestellt, dass die Auftragevorrichtung 4 präzise über die Arbeitsebene 10 bewegt werden kann, um das Objekt 2 präzise herzustellen. Gleichzeitig ermöglicht die Fertigungsvorrichtung 1 ein Temperieren des Arbeitsraums 9 während des Herstellvorgangs des Objekts 2, sodass optimale Bedingungen eingestellt werden können, um das Ausgangsmaterial zu dem Objekt 2 zu formen.

Neben der vorstehenden schriftlichen Beschreibung der Erfindung wird zu deren ergänzender Offenbarung hiermit explizit auf die zeichnerische Darstellung der Erfindung in den Fig. 2 und 3 Bezug genommen.

### Bezugszeichenliste

- 1: Fertigungsvorrichtung
- 2: dreidimensionales Objekt
- 3: Antrieb
- 4: Auftragevorrichtung
- 5: Ausgangsmaterial
- 6: Bewegungseinheit
- 7: Führungsschiene
- 8: Kraftübertragungseinheit
- 9: Arbeitsraum
- 10: Arbeitsebene
- 11: Heizvorrichtung
- 12: Schlitten
- 13: Verbindungselement
- 14: Magnet
- 15: Kugelgelenk

## Patentansprüche

1. Fertigungsvorrichtung (1) zum schichtweisen Herstellen eines dreidimensionalen Objekts (2), umfassend
• einen gegenüber einer Umgebung der Fertigungsvorrichtung (1) abgeschlossenen Arbeitsraum (9) mit einer Arbeitsebene (10), auf der das Objekt (2) formbar ist,
• eine Auftragevorrichtung (4) zum Aufschmelzen eines zugeführten Ausgangsmaterials (5) und zum schichtweisen Formen des aufgeschmolzenen Ausgangsmaterials auf der Arbeitsebene (10) zu dem Objekt (2),
• eine Bewegungseinheit (6) umfassend zumindest einen Antrieb (3) und zumindest eine Kraftübertragungseinheit (8) zum Bewegen der Auftragevorrichtung (4) in zumindest einer Raumrichtung,
• wobei die Auftragevorrichtung (4) und die Bewegungseinheit (6) innerhalb des abgeschlossenen Arbeitsraums (9) angeordnet sind.

2. Fertigungsvorrichtung (1) nach Anspruch 1, **dadurch gekennzeichnet, dass** eine Bewegung der Auftragevorrichtung (4) ausschließlich durch die Bewegungseinheit (5) ermöglicht ist.

3. Fertigungsvorrichtung (1) nach einem der vorhergehenden Ansprüche, **dadurch gekennzeichnet, dass** der Arbeitsraum (9) eine Heizvorrichtung (11) aufweist, um das Innere des Arbeitsraums (9), insbesondere auf eine Temperatur oberhalb der Raumtemperatur, aufzuheizen.

4. Fertigungsvorrichtung (1) nach einem der vorhergehenden Ansprüche, **dadurch gekennzeichnet, dass** die Auftragevorrichtung (4) und/oder die Bewegungseinheit (6) mit einer Kühlvorrichtung gekoppelt sind oder in einer temperaturbeständigen Ausführung vorliegen.

5. Fertigungsvorrichtung (1) nach einem der vorhergehenden Ansprüche, **dadurch gekennzeichnet, dass** die Kraftübertragungseinheit (8) einen Schlitten (12) umfasst, der in einer Führungsschiene (7) geführt und über ein Verbindungselement (13) mit der Auftragevorrichtung (4) gekoppelt ist, und der von dem Antrieb (3) entlang der Führungsschiene (7) bewegbar ist.

6. Fertigungsvorrichtung (1) nach Anspruch 5, **dadurch gekennzeichnet, dass** der Antrieb (3) zumindest einen Magneten (14) aufweist, wobei der Magnet (14) magnetisch mit dem Schlitten (12) gekoppelt ist, sodass der Schlitten (12) durch den Antrieb (3) bewegbar ist.

7. Fertigungsvorrichtung (1) nach Anspruch 5 oder 6, **dadurch gekennzeichnet, dass** die Bewegungseinheit (6) drei Schlitten (12) aufweist, die in jeweils einer eigenen Führungsschiene (7) geführt sind und die jeweils einen eigenen Antrieb (3) aufweisen.

8. Fertigungsvorrichtung (1) nach einem der Ansprüche 5 bis 7, **dadurch gekennzeichnet, dass** die Führungsschienen (7) parallel zueinander verlaufen und senkrecht zu der Arbeitsebene (10) angeordnet sind.

9. Fertigungsvorrichtung (1) nach einem der vorhergehenden Ansprüche, **dadurch gekennzeichnet, dass** die Bewegungseinheit (6) eine Dreiachs-Kinematik mit rechtwinkligen Achsen oder eine Delta-Kinematik zum Bewegen der Auftragevorrichtung (4) aufweist.

10. Fertigungsvorrichtung (1) nach einem der vorhergehenden Ansprüche, **dadurch gekennzeichnet, dass** die Bewegungseinheit (6) ein Bewegen der Auftragevorrichtung (4) zumindest in drei translatorischen Freiheitsgraden ermöglicht.

## Geänderte Patentansprüche

### Geänderte Patentansprüche gemäss Regel 137(2) EPÜ.

1. Fertigungsvorrichtung (1) zum schichtweisen Herstellen eines dreidimensionalen Objekts (2), umfassend
• einen gegenüber einer Umgebung der Fertigungsvorrichtung (1) abgeschlossenen Arbeitsraum (9) mit einer Arbeitsebene (10), auf der das Objekt (2) formbar ist,
• eine Auftragevorrichtung (4) zum Aufschmelzen eines zugeführten Ausgangsmaterials (5) und zum schichtweisen Formen des aufgeschmolzenen Ausgangsmaterials auf der Arbeitsebene (10) zu dem Objekt (2),
• eine Bewegungseinheit (6) umfassend zumindest einen Antrieb (3) und zumindest eine Kraftübertragungseinheit (8) zum Bewegen der Auftragevorrichtung (4) in zumindest einer Raumrichtung,
• wobei die Auftragevorrichtung (4) und die Bewegungseinheit (6) innerhalb des abgeschlossenen Arbeitsraums (9) angeordnet sind,
• wobei die Kraftübertragungseinheit (8) einen Schlitten (12) umfasst, der in einer Führungsschiene (7) geführt und über ein Verbindungselement (13) mit der Auftragevorrichtung (4) gekoppelt ist, und der von dem Antrieb (3) entlang der Führungsschiene (7) bewegbar ist,
**dadurch gekennzeichnet, dass**
• der Antrieb (3) zumindest einen Magneten (14) aufweist, wobei der Magnet (14) magnetisch mit dem Schlitten (12) gekoppelt ist, sodass der Schlitten (12) durch den Antrieb (3) bewegbar ist, und
• die Bewegungseinheit (6) drei Schlitten (12) aufweist, die in jeweils einer eigenen Führungsschiene (7) geführt sind und die jeweils einen eigenen Antrieb (3) aufweisen.

2. Fertigungsvorrichtung (1) nach Anspruch 1, **dadurch gekennzeichnet, dass** eine Bewegung der Auftragevorrichtung (4) ausschließlich durch die Bewegungseinheit (5) ermöglicht ist.

3. Fertigungsvorrichtung (1) nach einem der vorhergehenden Ansprüche, **dadurch gekennzeichnet, dass** der Arbeitsraum (9) eine Heizvorrichtung (11) aufweist, um das Innere des Arbeitsraums (9), insbesondere auf eine Temperatur oberhalb der Raumtemperatur, aufzuheizen.

4. Fertigungsvorrichtung (1) nach einem der vorhergehenden Ansprüche, **dadurch gekennzeichnet, dass** die Auftragevorrichtung (4) und/oder die Bewegungseinheit (6) mit einer Kühlvorrichtung gekoppelt sind oder in einer temperaturbeständigen Ausführung vorliegen.

5. Fertigungsvorrichtung (1) nach einem der vorhergehenden Ansprüche, **dadurch gekennzeichnet, dass** die Führungsschienen (7) parallel zueinander verlaufen und senkrecht zu der Arbeitsebene (10) angeordnet sind.

6. Fertigungsvorrichtung (1) nach einem der vorhergehenden Ansprüche, **dadurch gekennzeichnet, dass** die Bewegungseinheit (6) eine Delta-Kinematik zum Bewegen der Auftragevorrichtung (4) aufweist.

7. Fertigungsvorrichtung (1) nach einem der vorhergehenden Ansprüche, **dadurch gekennzeichnet, dass** die Bewegungseinheit (6) ein Bewegen der Auftragevorrichtung (4) zumindest in drei translatorischen Freiheitsgraden ermöglicht.
